# EUROPEAN PATENT SPECIFICATION

(11) **EP 3 974 922 B1**
(45) Date of publication and mention of the grant of the patent: **13.12.2023**
(21) Application number: 21196511.6
(22) Date of filing: 14.09.2021
(51) Int. Cl.: G05B 19/042

(54) **PACKAGING APPARATUS**
VERPACKUNGSVORRICHTUNG
APPAREIL D'EMBALLAGE

(30) Priority: 25.09.2020 JP 2020160899
(43) Date of publication of application: 30.03.2022
(73) Proprietor: ISHIDA CO., Ltd., Kyoto-shi, Kyoto 606-8392 (JP)
(72) Inventor: Ichikawa, Makoto, Shiga, 520-3026 (JP); Koike, Shinji, Shiga, 520-3026 (JP); Fujita, Kento, Shiga, 520-3026 (JP)
(74) Representative: Gill Jennings & Every LLP

(56) References cited:
- EP-A1- 3 603 902
- JP-A- 2012 225 831

## Description

### BACKGROUND

### Technical Field

This invention relates to a packaging apparatus that manufactures packages containing articles inside.

### Related Art

Conventionally, various types of optional devices are optionally attached to packaging apparatus. For example, patent document 1 (JP-ANo. 2018-12508) discloses a packaging apparatus to which a gas replacement device that replaces air inside packages with a predetermined gas is attached as an optional device. Such an optional device is usually switched between an operative setting and an inoperative setting as needed (e.g., depending on the type of articles to be packaged).

EP-A-3603902 discloses a method for building and/or maintaining an industrial machine comprising a plurality of machine components and being controlled by a machine application. A vision system identifies the states of the machine components, an assistant system compares the identified states to expected states, and if there is a deviation, the machine application is modified by the assistant system to rectify the deviation and enable the machine to operate.

JP-A-2012-225831 discloses a structure for covering and sealing the surroundings of a combinational scale, and a gas-charging system for filling the area with an inert gas. A detection means is provided for identifying when the structure is not correctly mounted, in which case a warning means is operated so that supply of the inert gas can be stopped.

### SUMMARY

### Technical Problem

In a packaging apparatus provided with such an optional device, there is a concern that, if the optional device is mistakenly set to the inoperative setting when the optional device needs to be operated, packages inconsistent with desired specifications will be manufactured unless the operator notices the mistake in the setting.

It is an object of this invention to provide a packaging apparatus that can reduce the possibility that packages inconsistent with desired specifications being manufactured due to an optional device being mistakenly set to an inoperative setting.

### Solution to Problem

A first aspect of the invention provides a packaging apparatus and an optional device which can be optionally attached to the packaging apparatus. The packaging apparatus is configured to operate a packaging mechanism to manufacture packages containing articles inside.. The packaging apparatus includes an operation control unit, a first detection unit, a second detection unit, a notification unit, and a notification control unit. The operation control unit controls the operation of the packaging mechanism in accordance with an operation command received by a receiving unit of the packaging apparatus. The first detection unit detects whether or not the optional device is attached to the packaging apparatus. The second detection unit detects whether a setting of the optional device is set to an operative setting or an inoperative setting in the operation command. The notification unit issues a notification of information relating to the optional device. The notification control unit controls the notification unit to make the notification unit issue a notification that the setting of the optional device is set to the inoperative setting in a case where the first detection unit detects that the optional device is attached to the packaging apparatus and the second detection unit detects that the setting of the optional device is set to the inoperative setting in the operation command, before the operation of the packaging mechanism is started.

In the packaging apparatus of the first aspect, a notification that the optional device is set to the inoperative setting is issued in a case where the setting of the optional device attached to the packaging apparatus is set to the inoperative setting. For that reason, the occurrence of problems where the packages are manufactured without the optional device being operated when the optional device should be operated can be reduced.

A packaging apparatus of a second aspect of the invention is the packaging apparatus of the first aspect, and further includes a receiving unit. The receiving unit receives a confirmation operation to confirm that the setting of the optional device is set to the inoperative setting when the notification unit issues the notification that the setting of the optional device is set to the inoperative setting. The operation control unit makes the packaging mechanism start operating after the receiving unit has received the confirmation operation when the notification unit issues the notification that the setting of the optional device is set to the inoperative setting.

In the packaging apparatus of the second aspect, the operation of the packaging mechanism is started after it has been confirmed by the operator that the optional device is set to the inoperative setting. The occurrence of problems where the packages are manufactured in a state in which the optional device is mistakenly set to the inoperative setting can be therefore reduced.

A packaging apparatus of a third aspect of the invention is the packaging apparatus of the second aspect, and further includes a storage unit. The storage unit stores a log showing that the receiving unit received the confirmation operation.

In the packaging apparatus of the third aspect, if the packages are manufactured in a state in which the optional device did not operate when it needed to operate, it can be easily checked whether or not the problem was caused by an operator mistake.

A packaging apparatus of a fourth aspect of the invention is the packaging apparatus of any of the first aspect to the third aspect, wherein the notification control unit controls the notification unit to further make the notification unit issue a notification that the setting of the optional device is set to the operative setting in a case where the first detection unit detects that the optional device is attached to the packaging apparatus and the second detection unit detects that the setting of the optional device is set to the operative setting.

In the packaging apparatus of the fourth aspect, the occurrence of problems where the packages are manufactured in a state in which the optional device is operated when the optional device should not be operated can be reduced.

A packaging apparatus of a fifth aspect of the invention is the packaging apparatus of any of the first aspect to the fourth aspect, wherein the notification control unit controls the notification unit to further make the notification unit issue a notification that the optional device is attached in a case where the first detection unit detects that the optional device is attached to the packaging apparatus.

In the packaging apparatus of the fifth aspect, it can be easily recognized that the packaging apparatus is detecting the presence of the optional device.

A packaging apparatus of a sixth aspect of the invention is the packaging apparatus of any of the first aspect to the fifth aspect, wherein the notification control unit does not make the notification unit issue a notification of the information relating to the optional device in a case where the first detection unit detects that the optional device is not attached to the packaging apparatus.

In the packaging apparatus of the sixth aspect, a notification of information relating to the optional device that is not present are not issued, so the operator is not confused by unnecessary information.

A packaging apparatus of a seventh aspect of the invention is the packaging apparatus of any of the first aspect to the sixth aspect, wherein the optional device is a gas replacement device that replaces air inside the packages with a predetermined gas.

In the packaging apparatus of the seventh aspect, even in a case where the optional device is a gas replacement device whose operating state is difficult to check visually, the occurrence of problems where the packages are manufactured without the gas replacement device being operated when the gas replacement device should be operated can be reduced.

### Advantageous Effects of Invention

The invention can reduce the occurrence of problems where packages are manufactured without an optional device being operated when the optional device should be operated.

### BRIEF DESCRIPTION OF DRAWINGS

FIG. 1 is a general perspective view of a weighing and packaging system including a bag-making and packaging apparatus pertaining to an embodiment of the packaging apparatus of the invention;
FIG. 2 is a general side view of the weighing and packaging system of FIG. 1, with a gas replacement device that is an optional device for the bag-making and packaging apparatus being conceptually depicted by a long dashed double-short dashed line;
FIG. 3 is a control block diagram of the bag-making and packaging apparatus of FIG. 1, with the gas replacement device that is an optional device for the bag-making and packaging apparatus being depicted by a long dashed double-short dashed line;
FIG. 4 is an example of operation reservation information stored in a storage unit of the bag-making and packaging apparatus of FIG. 1;
FIG. 5 is a flowchart of a process to decide whether or not to issue notifications relating to the optional device in the bag-making and packaging apparatus of FIG. 1;
FIG. 6 is a flowchart of a process for starting the operation of the bag-making and packaging apparatus, and control of the notifications relating to the optional device, in a case where the optional device is attached to the bag-making and packaging apparatus of FIG. 1;
FIG. 7 is an example of an image displayed on a touch panel display during the operation of the bag-making and packaging apparatus in a case where the gas replacement device is attached to the bag-making and packaging apparatus of FIG. 1 and the gas replacement device is set to an operative setting;
FIG. 8 is an example of an image displayed on the touch panel display before the operation of the bag-making and packaging apparatus is started in a case where the gas replacement device is attached to the bag-making and packaging apparatus of FIG. 1 and the gas replacement device is set to an inoperative setting;
FIG. 9 is an example of an image displayed on the touch panel display in a case where the gas replacement device is attached to the bag-making and packaging apparatus of FIG. 1, a receiving unit has received a confirmation operation to confirm that the gas replacement device is set to the inoperative setting, and the bag-making and packaging apparatus is operating; and
FIG. 10 is an example of an operation log stored in the storage unit of the bag-making and packaging apparatus of FIG. 1.

### DETAILED DESCRIPTION

A bag-making and packaging apparatus 100 pertaining to an embodiment of the packaging apparatus of the invention will be described with reference to the drawings.

### (1) Overall Configuration

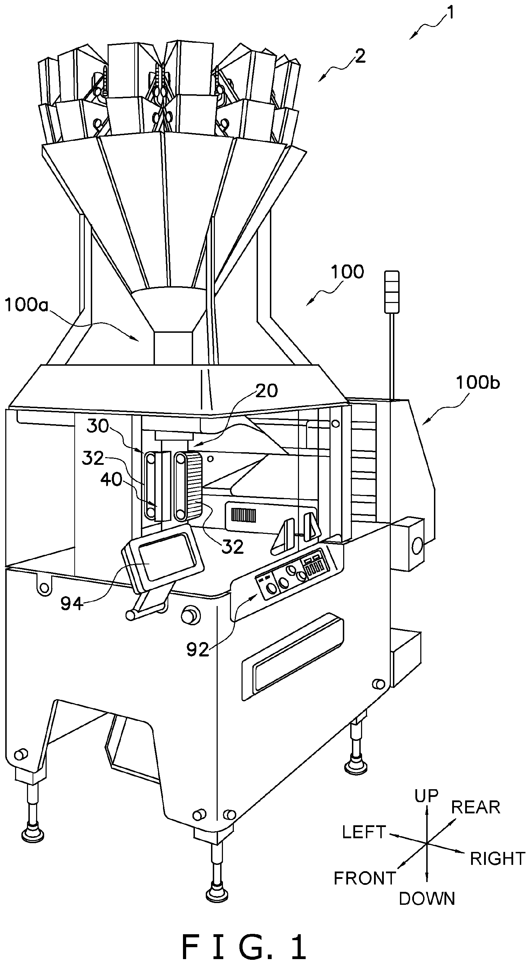

An overview of a weighing and packaging system 1 that includes the bag-making and packaging apparatus 100 will be described with reference to FIG. 1 to FIG. 3. The weighing and packaging system 1 is a system that manufactures packages (bags B) containing a predetermined quantity of articles A inside.

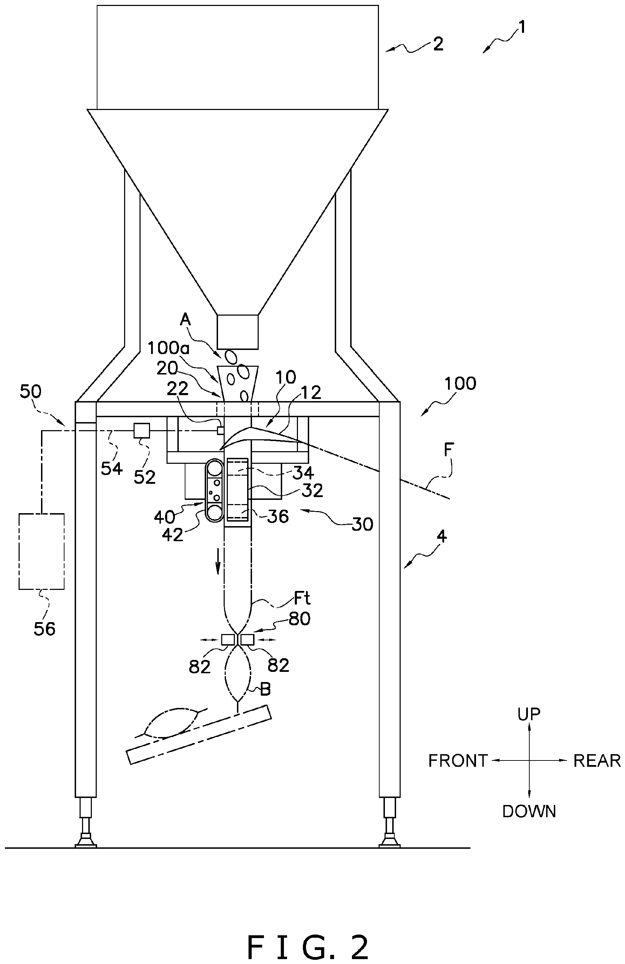

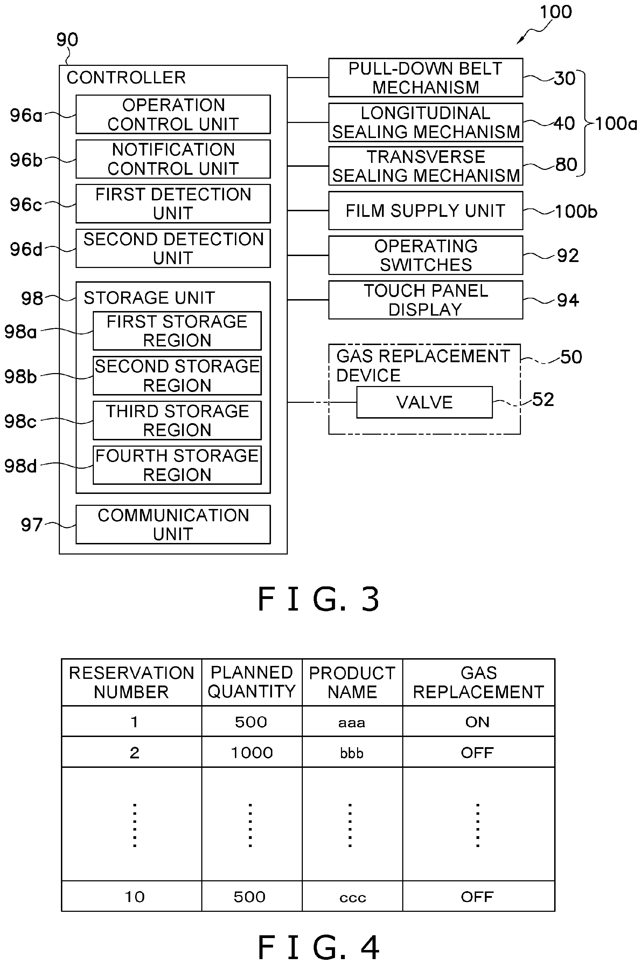

FIG. 1 is an external perspective view of the weighing and packaging system 1. FIG. 2 is a general side view of the weighing and packaging system 1. In FIG. 2, a gas replacement device 50 that is an optional device for the bag-making and packaging apparatus 100 is conceptually depicted by a long dashed double-short dashed line. FIG. 3 is a functional block diagram of the bag-making and packaging apparatus 100. In FIG. 3, the gas replacement device 50 that is an optional device for the bag-making and packaging apparatus 100 is depicted by a long dashed double-short dashed line.

The weighing and packaging system 1 mainly includes a combination weigher 2 and the bag-making and packaging apparatus 100 (see FIG. 1).

The combination weigher 2 weighs, with plural weigh hoppers, the weights of the articles A (contents), combines plural weight values to achieve a predetermined total weight, and supplies the articles A of the predetermined total weight resulting from the combination to the bag-making and packaging apparatus 100 disposed under the combination weigher 2.

The bag-making and packaging apparatus 100 is an apparatus that manufactures the bags B (packages) containing the articles A of the predetermined total weight supplied from the combination weigher 2.

The bag-making and packaging apparatus 100 is mainly equipped with a bag-making and packaging unit 100a, a film supply unit 100b, and a controller 90 (see FIG. 1 and FIG. 3). The bag-making and packaging apparatus 100 operates the bag-making and packaging unit 100a, which is an example of a packaging mechanism, to manufacture the bags B containing the articles A inside.

An optional device can be optionally attached to the bag-making and packaging apparatus 100. In other words, there are both cases where the optional device is attached to the bag-making and packaging apparatus 100 and cases where the optional device is not attached to the bag-making and packaging apparatus 100.

Although this is not intended to be limiting, in this embodiment, the optional device is the gas replacement device 50. The gas replacement device 50 is a device that replaces air inside the bags B with a predetermined gas when the bag-making and packaging apparatus 100 manufactures the bags B containing the articles A inside. The predetermined gas that the gas replacement device 50 uses is, for example, an inert gas such as nitrogen gas, although this is not intended to limit the type of the gas that the gas replacement device 50 uses.

The articles A are, for example, potato chips. However, the articles A are not limited to this and may also be a food contained in small bags (e.g., chocolate candies put into small bags). It will be noted that the type of the articles A may also be types of foods other than those exemplified here. Furthermore, the type of the articles A may also be a type other than foods.

The bag-making and packaging unit 100a is disposed under the combination weigher 2. The bag-making and packaging unit 100a manufactures the bags B containing the articles A supplied from the combination weigher 2.

The film supply unit 100b supplies a film (a sheet-like film F) for packaging, which is a material of the bags B, to the bag-making and packaging unit 100a.

The controller 90 is a device that controls the operations of the bag-making and packaging unit 100a and the film supply unit 100b. Furthermore, in a case where the gas replacement device 50 is attached to the bag-making and packaging apparatus 100, the controller 90 also controls the operation of the gas replacement device 50.

The weighing and packaging system 1 includes a touch panel display 94 that displays various types of information relating to the combination weigher 2 and the bag-making and packaging apparatus 100 (see FIG. 1 and FIG. 3). Furthermore, the weighing and packaging system 1 includes operating switches 92 for operating the combination weigher 2 and the bag-making and packaging apparatus 100. The touch panel display 94 is also used to operate the combination weigher 2 and the bag-making and packaging apparatus 100. In this embodiment, the operating switches 92 and the touch panel display 94 are shared by the combination weigher 2 and the bag-making and packaging apparatus 100. However, operating switches and touch panel displays may also be provided for each of the combination weigher 2 and the bag-making and packaging apparatus 100.

### (2) Detailed Configurations of Bag-making and Packaging Apparatus

Detailed configurations of the bag-making and packaging apparatus 100 will be described below. Specifically, the bag-making and packaging unit 100a, the film supply unit 100b, the controller 90, the gas replacement device 50, the operating switches 92, and the touch panel display 94 will be described.

In the following description, for convenience of description, expressions such as "front (front facing)," "rear (back facing)," "upper," "lower," "left," and "right" may be used to express directions and orientations, and here "front," "rear," "upper," "lower," "left," and "right" follow the directions indicated by the arrows in the drawings. Furthermore, in the following description, the expressions "upstream" and "downstream" are sometimes used, and "upstream" and "downstream" mean "upstream" and "downstream" in the conveyance direction of the film (the sheet-like film F and a tubular film Ft).

### (2-1) Film Supply Unit

The film supply unit 100b is a unit that supplies the sheet-like film F to a later-described forming unit 10 of the bag-making and packaging unit 100a.

The film supply unit 100b is disposed adjacent to the bag-making and packaging unit 100a. The film supply unit 100b is disposed in back of the bag-making and packaging unit 100a. In the film supply unit 100b, a film roll (not shown in the drawings) in which the film F is wound is set. The film supply unit 100b conveys, along a predetermined path, the film F paid out from the film roll and supplies it to the forming unit 10 of the bag-making and packaging unit 100a (see FIG. 2).

### (2-2) Bag-making and Packaging Unit and Gas Replacement Device

The bag-making and packaging unit 100a and the gas replacement device 50 that is an optional device will now be described.

As shown in FIG. 1 to FIG. 3, the bag-making and packaging unit 100a has a forming unit 10, a tubular member 20, a pull-down belt mechanism 30, a longitudinal sealing mechanism 40, a transverse sealing mechanism 80, and a support frame 4 that supports these.

In a case where the gas replacement device 50 is attached to the bag-making and packaging apparatus 100, a gas supply passage 54 of the gas replacement device 50 is connected to the tubular member 20. A setting of the gas replacement device 50 is switchable between an operative setting, in which it supplies the gas to the inside of the tubular member 20 when the bags B are being manufactured, and an inoperative setting, in which it does not supply the gas to the inside of the tubular member 20 when the bags B are being manufactured.

The operations of the bag-making and packaging unit 100a and the gas replacement device 50 will now be generally described. The forming unit 10 forms into a tubular shape the sheet-like film F conveyed thereto from the film supply unit 100b. In other words, the forming unit 10 forms a tubular film Ft from the sheet-like film F conveyed thereto from the film supply unit 100b. The tubular member 20 is disposed extending in the vertical direction from above the forming unit 10 to below the forming unit 10. An opening in the upper end portion of the tubular member 20 receives the articles A supplied by the combination weigher 2. The articles A that have been supplied to the opening in the upper end portion of the tubular member 20 drop through the inside of the tubular member 20. In a case where the gas replacement device 50 is attached to the bag-making and packaging apparatus 100 and the gas replacement device 50 is set to the operative setting, the gas replacement device 50 blows out the predetermined gas into the tubular member 20 at a predetermined timing when the bags B are being manufactured. The pull-down belt mechanism 30 conveys downward the tubular film Ft formed by the forming unit 10. The longitudinal sealing mechanism 40 seals, in the longitudinal direction, an overlapping part of the tubular film Ft. The transverse sealing mechanism 80 seals the upper and lower ends of the bags B by sealing, in the transverse direction, the tubular film Ft conveyed downward. In other words, the transverse sealing mechanism 80 seals the upper and lower ends of the bags B by sealing, along a direction intersecting the conveyance direction of the tubular film Ft, the tubular film Ft conveyed downward.

Below, each configuration of the bag-making and packaging unit 100a and the gas replacement device 50 will be described in detail.

### (2-2-1) Forming Unit

The forming unit 10 mainly includes a former 12. The former 12 is disposed surrounding the tubular member 20. The former 12 forms the tubular film Ft by bending the sheet-like film F in its width direction extending in the right and left direction so that the left end portion and the right end portion of the film F overlap each other.

### (2-2-2) Tubular Member

The tubular member 20 is a tubular member that extends in the up and down direction and has openings in its upper and lower ends. The tubular member 20 extends in the vertical direction from above the former 12 to below the former 12. Although this is not intended to be limiting, the tubular member 20 may be a single member or may be formed by combining plural members.

The former 12 is secured via a bracket not shown in the drawings to the tubular member 20. Furthermore, in a case where the gas replacement device 50 is attached to the bag-making and packaging apparatus 100, the gas supply passage 54 of the gas replacement device 50 is connected to a connector 22 provided on the outer surface of the tubular member 20. It will be noted that although FIG. 2 depicts only one connector 22 on the tubular member 20, the tubular member 20 may also be provided with plural connectors 22 so that the gas from the gas replacement device 50 is supplied from plural places on the tubular member 20.

The opening in the upper end of the tubular member 20 is funnel-shaped. As shown in FIG. 2, the articles A that the combination weigher 2 supplies to the bag-making and packaging apparatus 100 are supplied through the funnel-shaped opening in the upper portion of the tubular member 20 and drop through the inside of the tubular member 20.

### (2-2-3) Pull-down Belt Mechanism

The pull-down belt mechanism 30 sucks to hold the tubular film Ft and conveys downward the tubular film Ft wrapped around the tubular member 20. The pull-down belt mechanism 30 has a pair of belts 32 disposed so as to sandwich the tubular member 20 on both right and left sides of the tubular member 20 (see FIG. 1). The belts 32 have a sucking function. When the belts 32 are driven to rotate by drive rollers 34 driven by motors not shown in the drawings and follower rollers 36, the tubular film Ft sucked by the belts 32 is conveyed downward (see FIG. 2).

### (2-2-4) Longitudinal Sealing Mechanism

The longitudinal sealing mechanism 40 seals, along the longitudinal direction (here, the vertical direction), the overlapping part of the tubular film Ft wrapped around the tubular member 20.

The longitudinal sealing mechanism 40 is disposed in front of the tubular member 20 (see FIG. 2). The longitudinal sealing mechanism 40 has a heater not shown in the drawings, a heater belt 42 that contacts the overlapping part of the tubular film Ft, and a drive mechanism (not shown in the drawings) that drives the heater belt 42. The heater heats the heater belt 42. The drive mechanism drives the heater belt 42 in the forward and rearward directions toward or away from the tubular member 20. When the heater belt 42 is driven by the drive mechanism toward the tubular member 20, the overlapping part of the tubular film Ft wrapped around the tubular member 20 becomes pinched between the heater belt 42 and the tubular member 20. The longitudinal sealing mechanism 40 heat-seals the overlapping part of the tubular film Ft by pressing, with the heated heater belt 42, the overlapping part of the tubular film Ft against the tubular member 20 with a predetermined pressure.

### (2-2-5) Transverse Sealing Mechanism

The transverse sealing mechanism 80 is disposed under the longitudinal sealing mechanism 40 (see FIG. 2). The transverse sealing mechanism 80 is a mechanism including a pair of sealing jaws 82 that have built-in heaters (see FIG. 2).

The pair of sealing jaws 82 are driven by motors not shown in the drawings to revolve substantially in D-shapes while following mutually symmetrical trajectories, for example, although this is not intended to be limiting. As the drive mechanism for driving the sealing jaws 82 to revolve in this way, a mechanism disclosed in JP-A No. H10-53206, for example, is used. The pair of sealing jaws 82 that revolve substantially in D-shapes pinch the tubular film Ft in a state in which they press against each other, and apply pressure and heat to the part of the tubular film Ft that becomes the upper and lower end portions of the bags B to thereby seal the tubular film Ft. The pair of sealing jaws 82 transversely seal, in a direction (here, the up and down direction) intersecting the conveyance direction of the tubular film Ft, the tubular film Ft that has been longitudinally sealed by the longitudinal sealing mechanism 40. Particularly in this embodiment, the pair of sealing jaws 82 transversely seal, in a direction orthogonal to the conveyance direction of the tubular film Ft, the tubular film Ft that has been longitudinally sealed by the longitudinal sealing mechanism 40.

One of the pair of sealing jaws 82 has a built-in cutter not shown in the drawings. The cutter cuts apart the bag B and the subsequent tubular film Ft in a height direction middle position of the part transversely sealed by the sealing jaws 82.

### (2-2-6) Gas Replacement Device

The gas replacement device 50 is a device that is optionally attached to the bag-making and packaging apparatus 100.

For example, in a case where all articles with the potential to be contained in the bags B manufactured at the site where the bag-making and packaging apparatus 100 is used are articles that will not deteriorate, or are unlikely to deteriorate, even without an inert gas, the gas replacement device 50 does not need to be attached to the bag-making and packaging apparatus 100. For example, in a case where, among the articles to be contained in the bags B manufactured at the site where the bag-making and packaging apparatus 100 is used, articles that easily deteriorate in the presence of oxygen are present, it is preferred that the gas replacement device 50 be attached to the bag-making and packaging apparatus 100.

The gas replacement device 50 mainly includes a gas cylinder 56, the gas supply passage 54, and a valve 52.

The gas cylinder 56 retains an inert gas such as nitrogen gas in a pressurized state. The gas supply passage 54 is a pipe or tube that interconnects the gas cylinder 56 and the connector 22 of the tubular member 20. The valve 52 is provided in the gas supply passage 54. The valve 52 is a valve whose opening and closing is controlled by the controller 90. In this embodiment, the valve 52 is an electric valve. However, the valve 52 is not limited to this and may also be an air valve that uses compressed air as a drive source.

In a case where the gas replacement device 50 is set to the operative setting, the controller 90 controls the valve 52 to open at a predetermined timing. When the valve 52 is opened, the inert gas inside the gas cylinder 56 is injected into the tubular member 20 so that the air inside the tubular film Ft is replaced with the inert gas. In a case where the gas replacement device 50 is set to the inoperative setting, the controller 90 controls the valve 52 to remain closed (does not open the valve 52) while the bag-making and packaging apparatus 100 is operating.

### (2-3) Controller, Operating Switches, and Touch Panel Display

The controller 90, the operating switches 92, and the touch panel display 94 will now be described.

As mentioned above, in this embodiment, the operating switches 92 and the touch panel display 94 are shared by the combination weigher 2 and the bag-making and packaging apparatus 100. However, here, only functions such as operating the bag-making and packaging apparatus 100 and displaying information relating to the bag-making and packaging apparatus 100 out of the functions of the operating switches 92 and the touch panel display 94 will be described. Description regarding functions such as operating the combination weigher 2 and displaying information relating to the combination weigher 2 out of the functions of the operating switches 92 and the touch panel display 94 will be omitted.

The controller 90 has, as main components, a CPU and storage devices including a ROM, a RAM, and an auxiliary storage. The controller 90 is, as shown in FIG. 3, electrically connected to the pull-down belt mechanism 30, the longitudinal sealing mechanism 40, and the transverse sealing mechanism 80 of the bag-making and packaging unit 100a and to the film supply unit 100b.

Furthermore, in a case where the gas replacement device 50 is attached to the bag-making and packaging apparatus 100, the controller 90 is, as shown in FIG. 3, electrically connected to the valve 52 of the gas replacement device 50. It will be noted that in a case where the gas replacement device 50 has a control device separate from the controller 90 for controlling the operation and so forth of the valve 52, the controller 90 may also be communicably connected to the control device of the gas replacement device 50 instead of being electrically connected to the valve 52.

Furthermore, the controller 90 is, as shown in FIG. 3, electrically connected to the operating switches 92 and the touch panel display 94.

The operating switches 92 are switches for operating the bag-making and packaging apparatus 100. The touch panel display 94 is a display that displays the operating state of the bag-making and packaging apparatus 100. Furthermore, the touch panel display 94 also receives various types of operations with respect to the bag-making and packaging apparatus 100 and the input of information.

In short, the operating switches 92 and the touch panel display 94 function as a receiving unit (input unit) that receives various types of instructions with respect to the bag-making and packaging apparatus 100 and various types of settings relating to the bag-making and packaging apparatus 100. Furthermore, the touch panel display 94 functions as a notification unit that issues notifications of information (an output unit that outputs information) relating to the bag-making and packaging apparatus 100 (including information relating to the gas replacement device 50).

It will be noted that the controller 90 may also be communicably connected to a higher-level management device (not shown in the drawings) placed at the site where the bag-making and packaging apparatus 100 is installed and/or a personal digital assistant (not shown in the drawings) carried by the operator of the bag-making and packaging apparatus 100. In this case, a communication unit 97 of the controller 90 may function as a receiving unit that receives various types of commands and various types of settings relating to the bag-making and packaging apparatus 100 from the management device and/or the personal digital assistant and a notification unit that notifies the management device and/or the personal digital assistant of information relating to the bag-making and packaging apparatus 100.

Hereinafter, to prevent the description from becoming redundant, there are cases where the term "receiving unit" is used as a term meaning any of the operating switches 92, the touch panel display 94, and the communication unit 97. Furthermore, there are cases where the term "notification unit" is used as a term meaning either of the touch panel display 94 and the communication unit 97.

The settings that the receiving unit receives include a setting relating to whether or not the gas replacement device 50 is attached to the bag-making and packaging apparatus 100. For example, by performing, on the touch panel display 94, an operation to switch the setting relating to whether or not the gas replacement device 50 is attached, the controller 90 can be made to recognize whether or not the gas replacement device 50 is attached. Specifically, a first storage region 98a of a storage unit 98 of the controller 90 described later stores information relating to whether or not the gas replacement device 50 is attached to the bag-making and packaging apparatus 100 based on the setting, received by the receiving unit, relating to whether or not the gas replacement device 50 is attached. Based on the information stored in the first storage region 98a of the storage unit 98, the controller 90 can detect whether or not the gas replacement device 50 is attached.

The commands that the receiving unit receives include operation commands relating to the bag-making and packaging apparatus 100. The operation commands relating to the bag-making and packaging apparatus 100 include requests to the bag-making and packaging apparatus 100 to execute operation, operation settings relating to the bag-making and packaging apparatus 100, and information relating to the manufacturing quantity of the bags B, for example.

The operation commands relating to the bag-making and packaging apparatus 100 are input to the receiving unit as operation reservation information such as shown in FIG. 4, for example. Although this is not intended to be limiting, the operation reservation information includes reservation numbers, planned quantities (planned manufacturing quantities of the bags B), product names, information relating to whether gas replacement is set to ON or OFF (whether the gas replacement device 50 is set to the operative setting or the inoperative setting) as shown in FIG. 4, and various types of operation settings not shown in the drawings. The information in each row (the information associated with each reservation number) of the operation reservation information in FIG. 4 forms one operation command. The operation reservation information that has been input to the receiving unit is stored in a third storage region 98c of the storage unit 98 of the controller 90 described later.

The controller 90 manufactures the bags B containing the articles A in accordance with the operation reservation information that has been input. The controller 90 manufactures the bags B containing the articles A in order beginning with the operation reservation information with the smallest reservation number for example, in the planned quantities associated with each of the reservation numbers, using the various types of operation settings corresponding to each of the reservation numbers.

The ON or OFF of the gas replacement associated with each of the reservation numbers represents whether the gas replacement device 50 is to be set to the operative setting or the inoperative setting when manufacturing the bags B based on the operation commands of those reservation numbers.

The controller 90 basically controls the setting of the gas replacement device 50 to the operative setting or the non-operative setting based on the settings relating to whether gas replacement is set to ON or OFF in the operation reservation information. However, as described later, in a case where gas replacement is set to OFF in a given reservation number, the controller 90 makes the notification unit issue a notification thereof before the manufacture of the bags B of that reservation number is started. Furthermore, in a case where gas replacement is set to OFF in a given reservation number, the controller 90 may also request the operator of the bag-making and packaging apparatus 100 to confirm that there is not a mistake in the gas replacement setting. Details will be described later.

Although, a case is described where the operation commands are collectively input as the operation reservation information in regard to plural reservation numbers here, the way the operation commands are input may not limited to this way. For example, the operator of the bag-making and packaging apparatus 100 may input the operation commands to the receiving unit each time one given product is to be manufactured.

The information of which the notification unit issues notifications includes operating conditions of the bag-making and packaging apparatus 100. The operation conditions of the bag-making and packaging apparatus 100 include information such as whether or not the bag-making and packaging apparatus 100 is operating and how many bags B the bag-making and packaging apparatus 100 has manufactured.

Furthermore, the information of which the notification unit issues notifications includes information indicating that the setting of the gas replacement device 50 is set to the inoperative setting. Furthermore, the information of which the notification unit issues notifications may also include information indicating that the setting of the gas replacement device 50 is set to the operative setting. Details about the notification of the information relating to the gas replacement device 50 will be described later.

The controller 90 has a storage unit 98 that stores programs and various types of information. The storage unit 98 includes, as regions for storing information, a first storage region 98a, a second storage region 98b, a third storage region 98c, and a fourth storage region 98d. Details about the information stored in each of the storage regions 98a to 98d will be described later.

The controller 90 executes various types of functions as a result of the CPU executing the programs stored in the storage unit 98. For example, the controller 90 functions as an operation control unit 96a, a notification control unit 96b, a first detection unit 96c, a second detection unit 96d, and the communication unit 97 as a result of the CPU executing the programs stored in the storage device. It will be noted that the functions of these functional units may be realized by software, or may be realized by hardware, or may be realized by software and hardware working together.

The storage unit 98, the communication unit 97, the first detection unit 96c, the second detection unit 96d, the operation control unit 96a, and the notification control unit 96b of the controller 90 will now be described.

### (2-3-1) Storage Unit

The information stored in the first storage region 98a, the second storage region 98b, the third storage region 98c, and the fourth storage region 98d of the storage unit 98 will now be described.

### (a) First Storage Region

The first storage region 98a stores information relating to whether or not the gas replacement device 50 is attached to the bag-making and packaging apparatus 100 in accordance with the setting, received by the receiving unit (e.g., the touch panel display 94), relating to whether or not the gas replacement device 50 is attached to the bag-making and packaging apparatus 100. For example, in the first storage region 98a, a flag is lowered in an initial setting, and the flag is raised in a case where the receiving unit has received a setting indicating that the gas replacement device 50 is attached to the bag-making and packaging apparatus 100.

### (b) Second Storage Region

The second storage region 98b stores information relating to whether the gas replacement device 50 is set to the operative setting or the inoperative setting (whether gas replacement is set to ON or OFF), which is included in the operation commands relating to the bag-making and packaging apparatus 100 received by the receiving unit. For example, when the operation commands relating to the bag-making and packaging apparatus 100 are operation reservation information such as shown in FIG. 4 and the operation of the bag-making and packaging apparatus 100 is started in regard to a given reservation number, information that is associated with that reservation number and is related to whether the gas replacement device 50 is set to the operative setting or the inoperative setting is stored in the second storage region 98b. For example, when the setting of the gas replacement device 50 associated with a given reservation number is set to the operative setting (gas replacement is set to ON), the flag in the second storage region 98b is raised. For example, when the setting of the gas replacement device 50 associated with a given reservation number is set to the inoperative setting (gas replacement is set to OFF), the flag in the second storage region 98b is lowered.

### (c) Third Storage Region

The third storage region 98c stores the operation reservation information received by the receiving unit. The operation reservation information may be input from the operating switches 92 and/or the touch panel display 94, or may be input via the communication unit 97 from the higher-level management device and/or the personal digital assistant of the operator.

### (d) Fourth Storage Region

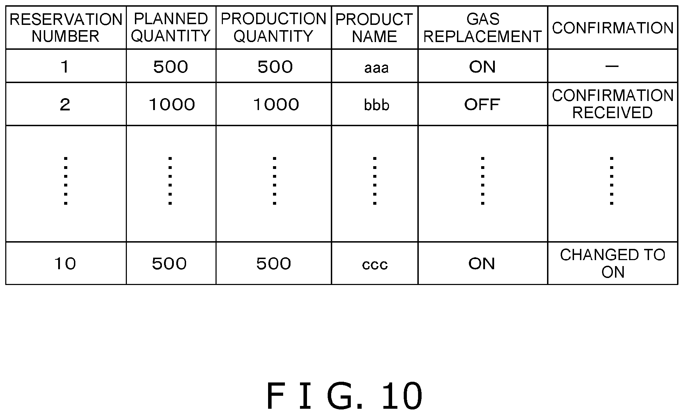

For example, the fourth storage region 98d stores an operation log such as shown in FIG. 10. The operation log is information relating to the details of actual operations that have been executed in accordance with the operation reservation information (in other words, the operation commands).

It will be noted that, as described later, in a case where the receiving unit is configured to receive a confirmation operation or a change operation when the notification unit issues the notification that the setting of the gas replacement device 50 is set to the inoperative setting before the operation of the bag-making and packaging unit 100a is started, it is preferred that a log showing that the receiving unit received the confirmation operation or the change operation be stored in the operation log stored in the fourth storage region 98d.

Furthermore, as described later, in a case where the receiving unit is configured to receive a confirmation operation or a change operation when the notification unit issues the notification that the setting of the gas replacement device 50 is set to the operative setting before the operation of the bag-making and packaging unit 100a is started, it is preferred that a log showing that the receiving unit received the confirmation operation or the change operation be stored in the operation log stored in the fourth storage region 98d.

The confirmation operation and the change operation will be described later.

### (2-3-2) Communication Unit

The communication unit 97 sends various types of information as needed to devices (e.g., the higher-level management device and the personal digital assistant of the operator not shown in the drawings) communicably connected by wire or wirelessly to the controller 90 and receives various types of information sent from those devices.

Although this is not intended to be limiting, the communication unit 97 receives the operation reservation information from the management device and/or the personal digital assistant not shown in the drawings. The operation reservation information received by the communication unit 97 is stored in the third storage region 98c of the storage unit 98.

Furthermore, although this is not intended to be limiting, the communication unit 97 sends the operation log information stored in the fourth storage region 98d of the storage unit 98 to the management device and/or the personal digital assistant not shown in the drawings in response to a request from the management device and/or the personal digital assistant or at a predetermined timing.

### (2-3-3) First Detection Unit

The first detection unit 96c detects whether or not the optional device is attached to the bag-making and packaging apparatus 100. In this embodiment, the first detection unit 96c detects whether or not the gas replacement device 50 is attached to the bag-making and packaging apparatus 100. Specifically, the first detection unit 96c detects whether or not the gas replacement device 50 is attached to the bag-making and packaging apparatus 100 by referencing the first storage region 98a of the storage unit 98.

### (2-3-4) Second Detection Unit

The second detection unit 96d detects whether the setting of the optional device is set to the operative setting or the inoperative setting. In this embodiment, the second detection unit 96d detects whether the setting of the gas replacement device 50 is set to the operative setting or the inoperative setting. Specifically, the second detection unit 96d detects whether the setting of the gas replacement device 50 is set to the operative setting or the inoperative setting by referencing the second storage region 98b of the storage unit 98.

### (2-3-5) Operation Control Unit

The operation control unit 96a controls the operation of the bag-making and packaging unit 100a (the pull-down belt mechanism 30, the longitudinal sealing mechanism 40, the transverse sealing mechanism 80, etc.) that is an example of a packaging mechanism. The operation control unit 96a also controls the operation of the film supply unit 100b.

Moreover, the operation control unit 96a controls the operation of the gas replacement device 50 in a case where the gas replacement device 50 is attached to the bag-making and packaging apparatus 100 and the gas replacement device 50 is set to the operative setting.

The operation control unit 96a controls the operations of the various configurations of the bag-making and packaging unit 100a, the film supply unit 100b, and the gas replacement device 50 in accordance with the commands and settings that have been input to the receiving unit (such as the operating switches 92, the touch panel display 94, the communication unit 97). For example, the operation control unit 96a controls the operations of the various configurations of the bag-making and packaging apparatus 100 in accordance with the operation reservation information that has been input to the receiving unit and stored in the third storage region 98c of the storage unit 98.

More specifically, for example, the operation control unit 96a changes the settings and so forth of the various configurations of the bag-making and packaging apparatus 100 and starts manufacturing the bags B in accordance with the operation settings corresponding to the smallest reservation number (hereinafter called "the selected reservation number") out of unexecuted reservation numbers (unexecuted operation commands) included in the operation reservation information. Furthermore, the operation control unit 96a imports necessary information from various sensors (not shown in the drawings) installed in the bag-making and packaging apparatus 100 and controls the operations of the various configurations of the bag-making and packaging apparatus 100 based on that information. After the bag-making and packaging apparatus 100 manufactures the planned quantity of the bags B associated with the selected reservation number, the operation control unit 96a again changes the settings and so forth of the various configurations of the bag-making and packaging apparatus 100 in accordance with the operation settings corresponding to the reservation number following the executed reservation number out of the unexecuted reservation numbers included in the operation reservation information and then starts manufacturing the bags B using the changed settings.

The operation of the bag-making and packaging apparatus 100 controlled by the operation control unit 96a will now be described. Processes performed by the controller 90 when the operation control unit 96a starts the operation of the bag-making and packaging apparatus 100 will be described later.

The operation control unit 96a controls the operations of the film supply unit 100b and the pull-down belt mechanism 30 to convey the sheet-like film F to the forming unit 10. In the forming unit 10, the sheet-like film F becomes wrapped around the outer surface of the tubular member 20 and formed into the tubular film Ft when it passes through a gap between the former 12 and the tubular member 20. Both edge portions of the tubular film Ft in its transverse direction overlap each other in the longitudinal direction. The pull-down belt mechanism 30 conveys the tubular film Ft downward along the outer surface of the tubular member 20. The longitudinal sealing mechanism 40 heat-seals, in the longitudinal direction, the overlapping part of the tubular film Ft. Thereafter, the tubular film Ft goes past the section with the tubular member 20 and descends to the transverse sealing mechanism 80. In a case where the gas replacement device 50 is attached to the bag-making and packaging apparatus 100 and the gas replacement device 50 is set to the operative setting, the operation control unit 96a opens the valve 52 at a predetermined timing to inject the gas into the tubular member 20. Specifically, in a case where information indicating that the gas replacement device 50 is attached is stored in the first storage region 98a and information indicating that the gas replacement device 50 is set to the operative setting is stored in the second storage region 98b, the operation control unit 96a opens the valve 52 at a predetermined timing to inject the gas into the tubular member 20 and replace the air inside the bag B with the gas. The transverse sealing mechanism 80 heat-seals the tubular film Ft in the transverse direction using the pair of sealing jaws 82 in a state in which the articles A are in the vicinity of the lower end of the tubular film Ft and simultaneously forms the upper seal part of the leading bag B and the lower seal part of the trailing bag B. At this time, the cutter (not shown in the drawings) built into one of the pair of sealing jaws 82 cuts apart the leading bag B and the trailing bag B (the tubular film Ft).

### (2-3-6) Notification Control Unit

The notification control unit 96b, for example, controls the operation of the touch panel display 94 functioning as a notification unit to make the touch panel display 94 issue a notification of the predetermined information (display the predetermined information). Furthermore, the notification control unit 96b, for example, controls the operation of the communication unit 97 functioning as a notification unit to make the communication unit 97 issue a notification of the predetermined information to the management device and/or the personal digital assistant communicably connected to the controller 90.

Here, processes executed by the notification control unit 96b will be described using as an example a case where the notification control unit 96b controls the operation of the touch panel display 94 serving as a notification unit.

The notification control unit 96b makes the touch panel display 94 issue notifications of the information relating to the gas replacement device 50 (output the information relating to the gas replacement device 50). It will be noted that the notification control unit 96b may also control the touch panel display 94 so that the touch panel display 94 issue notifications of information other than information relating to the gas replacement device 50. However, here, control, by the notification control unit 96b, of notifications of information relating to the gas replacement device 50 with respect to the touch panel display 94 will mainly be described.

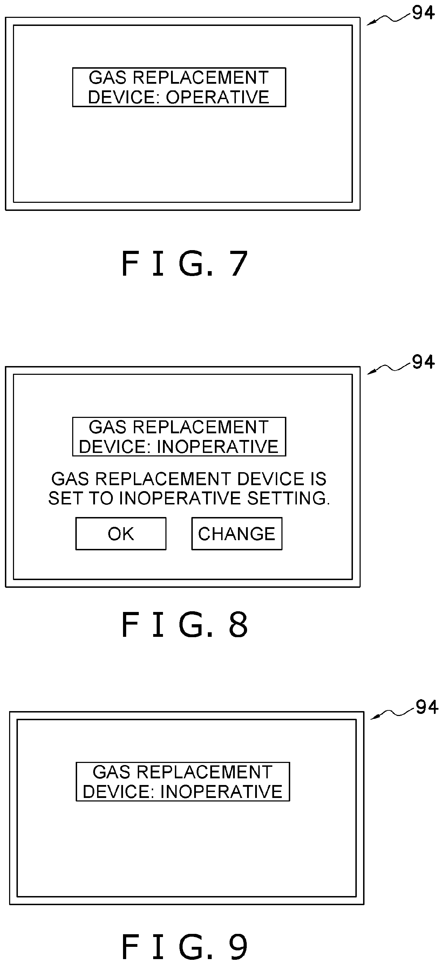

The notification control unit 96b, in a case where a first condition is met, makes the touch panel display 94 issue a notification that the setting of the gas replacement device 50 is set to the inoperative setting at least before the operation of the bag-making and packaging unit 100a is started (see FIG. 8). The first condition is a condition where the gas replacement device 50 is attached to the bag-making and packaging apparatus 100 and the setting of the gas replacement device 50 is set to the inoperative setting. More specifically, the first condition is a condition where the first detection unit 96c detects that the gas replacement device 50 is attached to the bag-making and packaging apparatus 100 and the second detection unit 96d detects that the setting of the gas replacement device 50 is set to the inoperative setting. Furthermore, in a case where the first condition is met, the notification control unit 96b may also make the touch panel display 94 issue a notification that the setting of the gas replacement device 50 is set to the inoperative setting while the bag-making and packaging unit 100a is operating (see FIG. 9).

With this configuration, when the setting of the gas replacement device 50 is set to the inoperative setting by mistake, the operator of the bag-making and packaging apparatus 100 easily notices the mistake. For that reason, manufacturing of the bags B in which the air inside is not replaced with the gas and which do not conform to required specifications can be reduced.

It is preferred that the notification control unit 96b further make the touch panel display 94 display first information when making the touch panel display 94 issue the notification that the setting of the gas replacement device 50 is set to the inoperative setting before the operation of the bag-making and packaging unit 100a is started. The first information is information prompting the operator of the bag-making and packaging apparatus 100 to execute a confirmation operation to confirm that the setting of the gas replacement device 50 is set to the inoperative setting (see FIG. 8). Additionally, it is preferred that the operation control unit 96a make the bag-making and packaging unit 100a start operating after the receiving unit has received the confirmation operation when the touch panel display 94 issues the notification that the setting of the gas replacement device 50 is set to the inoperative setting before the operation of the bag-making and packaging unit 100a is started. Although this is not intended to be limiting, the confirmation operation here is, for example, an operation where the operator touches an "OK" button (see FIG. 8) part displayed on the touch panel display 94 serving as the receiving unit.

With this configuration, when the setting of the gas replacement device 50 is set to the inoperative setting by mistake, the operator of the bag-making and packaging apparatus 100 is less likely to fail to notice the mistake. Furthermore, the bag-making and packaging unit 100a does not automatically start operating without a confirmation from the operator. Therefore, if there is a mistake in the setting of the gas replacement device 50, the operator can change the setting of the gas replacement device 50 to a correct setting before the manufacture of the bags B is started.

It will be noted that the notification control unit 96b may also make the touch panel display 94 serving as a receiving unit display, in addition to the "OK" button, a "Change" button for changing the setting of the gas replacement device 50 to the operative setting (see FIG. 8). In a case where the "Change" button part has been touched (this operation is called a change operation), the setting of the gas replacement device 50 stored in the second storage region 98b of the storage unit 98 is changed from the inoperative setting to the operative setting. In a case where the notification control unit 96b also makes the touch panel display 94 serving as the receiving unit display the "Change" button, it is preferred that the operation control unit 96a make the bag-making and packaging unit 100a start operating after the receiving unit has received the confirmation operation or the change operation. The operation control unit 96a controls the operation of the gas replacement device 50 based on the setting of the gas replacement device 50 stored in the second storage region 98b of the storage unit 98 while the bag-making and packaging apparatus 100 is operating.

It is preferred that the storage unit 98 store a log showing that the receiving unit received the confirmation operation. Furthermore, it is preferred that the storage unit 98 store a log showing that the receiving unit received the change operation. For example, the log showing that the receiving unit received the confirmation operation or the change operation is stored in the fourth storage region 98d of the storage unit 98 as part of the operation log.

Furthermore, in a case where a second condition is met, it is preferred that the notification control unit 96b make the touch panel display 94 issue a notification that the setting of the gas replacement device 50 is set to the operative setting (see FIG. 7). The second condition is a condition where the gas replacement device 50 is attached to the bag-making and packaging apparatus 100 and the setting of the gas replacement device 50 is set to the operative setting. More specifically, the second condition is a condition where the first detection unit 96c detects that the gas replacement device 50 is attached to the bag-making and packaging apparatus 100 and the second detection unit 96d detects that the setting of the gas replacement device 50 is set to the operative setting.

For example, in a case where the second condition is met, the notification control unit 96b may make the touch panel display 94 issue a notification that the setting of the gas replacement device 50 is set to the operative setting before the operation of the bag-making and packaging unit 100a is started. Furthermore, for example, in a case where the second condition is met, the notification control unit 96b may make the touch panel display 94 issue a notification that the setting of the gas replacement device 50 is set to the operative setting while the bag-making and packaging unit 100a is operating in addition to or instead of before the operation of the bag-making and packaging unit 100a is started.

With this configuration, when the setting of the gas replacement device 50 is set to the operative setting by mistake, the operator of the bag-making and packaging apparatus 100 easily notices the mistake.

In a case where the notification control unit 96b makes the touch panel display 94 issue the notification that the setting of the gas replacement device 50 is set to the operative setting before the operation of the bag-making and packaging unit 100a is started, the notification control unit 96b may also make the touch panel display 94 display second information. The second information is information prompting the operator of the bag-making and packaging apparatus 100 to execute a confirmation operation to confirm that the setting of the gas replacement device 50 is set to the operative setting. Additionally, the operation control unit 96a may make the bag-making and packaging unit 100a start operating after the receiving unit has received the confirmation operation when the touch panel display 94 issues the notification that the setting of the gas replacement device 50 is set to the operative setting before the operation of the bag-making and packaging unit 100a is started. Although this is not intended to be limiting, the confirmation operation here is, for example, an operation where the operator touches an "OK" button part displayed on the touch panel display 94 serving as the receiving unit.

It will be noted that the notification control unit 96b may also make the touch panel display 94 serving as a receiving unit display, in addition to the "OK" button, a "Change" button for changing the setting of the gas replacement device 50 to the inoperative setting. In a case where the "Change" button part has been touched (this operation is called a change operation), the setting of the gas replacement device 50 stored in the second storage region 98b of the storage unit 98 is changed from the operative setting to the inoperative setting. In a case where the notification control unit 96b also makes the touch panel display 94 serving as the receiving unit display the "Change" button, it is preferred that the operation control unit 96a make the bag-making and packaging unit 100a start operating after the receiving unit has received the confirmation operation or the change operation. The operation control unit 96a controls the operation of the gas replacement device 50 based on the setting of the gas replacement device 50 stored in the second storage region 98b of the storage unit 98 while the bag-making and packaging apparatus 100 is operating.

It is preferred that the storage unit 98 store a log showing that the receiving unit received the confirmation operation. Furthermore, it is preferred that the storage unit 98 store a log showing that the receiving unit received the change operation. For example, the log showing that the receiving unit received the confirmation operation or the change operation is stored in the fourth storage region 98d of the storage unit 98 as part of the operation log.

However, in this embodiment, the second information is not displayed on the touch panel display 94. Furthermore, in this embodiment, the receiving unit does not receive the confirmation operation in a case where the setting of the gas replacement device 50 is set to the operative setting.

Furthermore, it is preferred that the notification control unit 96b control the touch panel display 94 to make the touch panel display 94 issue a notification that the gas replacement device 50 is attached in a case where the gas replacement device 50 is attached to the bag-making and packaging apparatus 100. More specifically, it is preferred that the notification control unit 96b control the touch panel display 94 to make the touch panel display 94 issue a notification that the gas replacement device 50 is attached in a case where the first detection unit 96c detects that the gas replacement device 50 is attached to the bag-making and packaging apparatus 100.

Furthermore, it is preferred that the notification control unit 96b not make the touch panel display 94 issue notifications of information relating to the gas replacement device 50 in a case where the gas replacement device 50 is not attached to the bag-making and packaging apparatus 100. It is preferred that the notification control unit 96b not make the touch panel display 94 issue notifications of information relating to the gas replacement device 50 in a case where the first detection unit 96c detects that the gas replacement device 50 is not attached to the bag-making and packaging apparatus 100. With this configuration, the operator of the bag-making and packaging apparatus 100 is not confused as a result of being notified of information relating to the setting of the gas replacement device 50 that is not present (that is not attached).

### (3) Process to Decide Whether or Not to Issue Notifications Relating to Optional Device

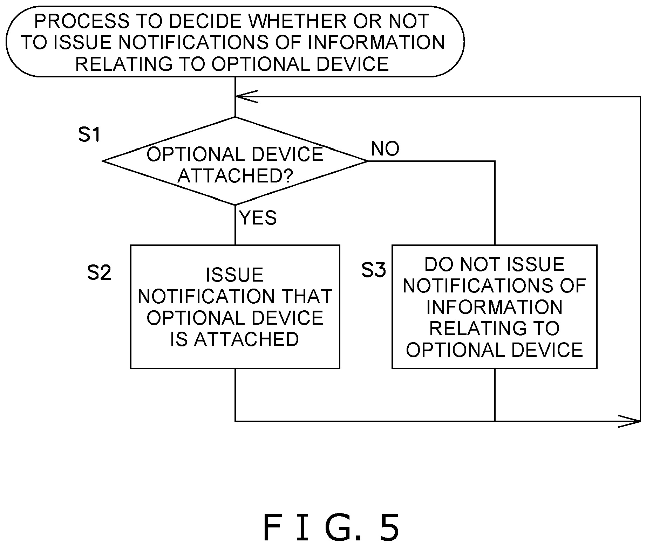

A process to decide whether or not to issue notifications relating to the optional device will now be described with reference to the flowchart of FIG. 5. Here, the process to decide whether or not to issue notifications relating to the optional device will be described using as an example a case where the notification unit is the touch panel display 94 and the optional device is the gas replacement device 50.

The first detection unit 96c continuously detects whether or not the gas replacement device 50 is attached to the bag-making and packaging apparatus 100. Specifically, the first detection unit 96c detects whether or not the gas replacement device 50 is attached to the bag-making and packaging apparatus 100 by continuously referencing the first storage region 98a of the storage unit 98 (step S 1).

When the first detection unit 96c detects that the gas replacement device 50 is attached to the bag-making and packaging apparatus 100, the notification control unit 96b controls the notification unit to make the touch panel display 94 issue a notification that the gas replacement device 50 is attached (step S2). Specifically, in a case where the first detection unit 96c detects that the gas replacement device 50 is attached to the bag-making and packaging apparatus 100, the notification control unit 96b controls the touch panel display 94 to make the touch panel display 94 issue a notification of information letting the operator know that the gas replacement device 50 is attached. The information letting the operator know that the gas replacement device 50 is attached is, for example, the text "Gas Replacement" or an image representing the gas replacement device 50.

When the first detection unit 96c detects that the gas replacement device 50 is not attached to the bag-making and packaging apparatus 100, the notification control unit 96b does not make the notification unit issue notifications of information relating to the gas replacement device 50 (step S3). Specifically, in a case where the first detection unit 96c detects that the gas replacement device 50 is not attached to the bag-making and packaging apparatus 100, the notification control unit 96b does not make (instruct) the touch panel display 94 issue notifications of information relating to the gas replacement device 50 (e.g., information letting the operator know that the gas replacement device 50 is attached and information relating to the setting of the gas replacement device 50).

### (4) Process for Starting Operation of Bag-making and Packaging Apparatus, and Control of Notifications Relating to Optional Device, when Optional Device is Attached

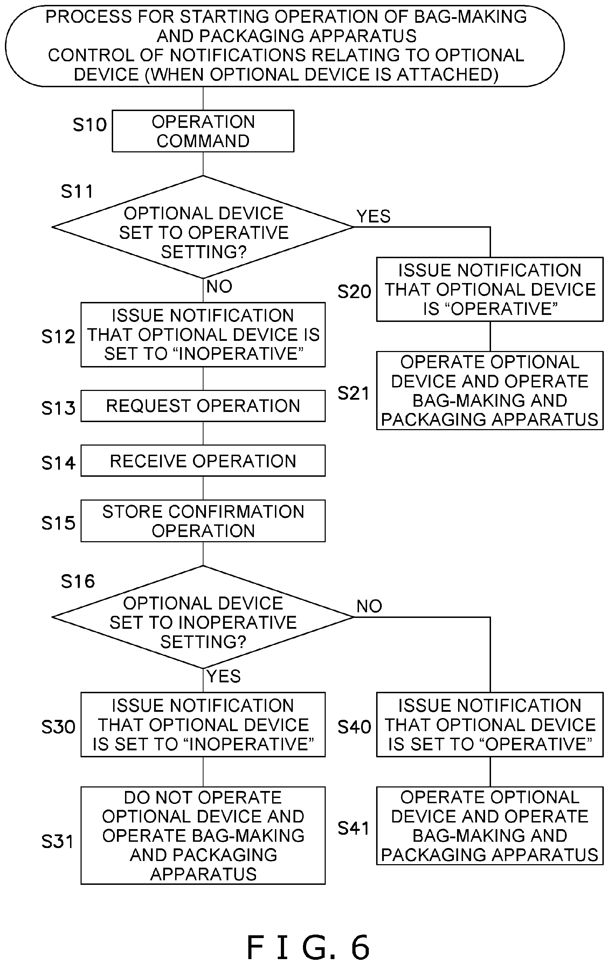

A process for starting the operation of the bag-making and packaging apparatus, and control of the notifications relating to the optional device, when the optional device is attached to the bag-making and packaging apparatus 100 will now be described with reference to the flowchart of FIG. 6. It will be noted that the flowchart of FIG. 6 is merely an example of the process for starting the operation of the bag-making and packaging apparatus, and control of the notifications relating to the optional device, when the optional device is attached to the bag-making and packaging apparatus 100, and can be changed as appropriate.

Here, the process for starting the operation of the bag-making and packaging apparatus, and control of the notifications relating to the optional device, when the optional device is attached will be described using as an example a case where the notification unit is the touch panel display 94 and the optional device is the gas replacement device 50.

Here, as a premise, it is supposed that the first detection unit 96c is detecting that the gas replacement device 50 is attached to the bag-making and packaging apparatus 100.

The process described below is started when the controller 90 receives an operation command relating to the bag-making and packaging apparatus 100 (S10). Although this is not intended to be limiting, "the controller 90 receives an operation command" here means that the operation control unit 96a calls up, from the third storage region 98c of the storage unit 98, an operation command relating to the bag-making and packaging apparatus 100 corresponding to one reservation number to be executed henceforth. When the controller 90 receives the operation command relating to the bag-making and packaging apparatus 100, information relating to whether the gas replacement device 50 is set to the operative setting or the inoperative setting (whether gas replacement is ON or OFF), which is included in the operation command relating to the bag-making and packaging apparatus 100, is stored in the second storage region 98b of the storage unit 98.

In step S 11 the second detection unit 96d detects whether the setting of the gas replacement device 50 is set to the operative setting or the inoperative setting by referencing the second storage region 98b of the storage unit 98. In a case where the setting of the gas replacement device 50 is set to the operative setting, the controller 90 proceeds to step S20, and in a case where the setting of the gas replacement device 50 is set to the inoperative setting, the controller 90 proceeds to step S12.

In step S20 the notification control unit 96b makes the touch panel display 94 issue a notification that the setting of the gas replacement device 50 is set to the operative setting (see FIG. 7). Then, the operation control unit 96a starts the operation of the bag-making and packaging apparatus 100. While the bag-making and packaging apparatus 100 is operating, the operation control unit 96a operates the gas replacement device 50 at a predetermined timing (S21).

In step S12 the notification control unit 96b makes the touch panel display 94 issue a notification that the setting of the gas replacement device 50 is set to the inoperative setting (see FIG. 8). Furthermore, the notification control unit 96b makes the touch panel display 94 display the first information (see FIG. 8) to prompt the operator of the bag-making and packaging apparatus 100 to execute the confirmation operation to confirm that the setting of the gas replacement device 50 is set to the inoperative setting or the change operation to change the setting of the gas replacement device 50 to the operative setting (step S13). The receiving unit receives the operation (the confirmation operation or the change operation) executed by the operator of the bag-making and packaging apparatus 100 (step S14) and stores a log showing that the receiving unit received the confirmation operation or the change operation in the fourth storage region 98d of the storage unit 98 as part of the operation log (step S15).

In step S16 the second detection unit 96d again detects whether the setting of the gas replacement device 50 is set to the operative setting or the inoperative setting by referencing the second storage region 98b of the storage unit 98. In a case where the setting of the gas replacement device 50 is set to the inoperative setting, the controller 90 proceeds to step S30, and in a case where the setting of the gas replacement device 50 is set to the operative setting (in a case where the setting of the gas replacement device 50 has been changed), the controller 90 proceeds to step S40.

In step S30 the notification control unit 96b makes the touch panel display 94 issue a notification that the setting of the gas replacement device 50 is set to the inoperative setting (see FIG. 9). Then, the operation control unit 96a starts the operation of the bag-making and packaging apparatus 100. While the bag-making and packaging apparatus 100 is operating, the operation control unit 96a does not operate the gas replacement device 50 (step S31).

In step S40 the notification control unit 96b makes the touch panel display 94 issue a notification that the setting of the gas replacement device 50 is set to the operative setting (see FIG. 7). Then, the operation control unit 96a starts the operation of the bag-making and packaging apparatus 100. While the bag-making and packaging apparatus 100 is operating, the operation control unit 96a operates the gas replacement device 50 at a predetermined timing (step S41).

### (5) Characteristics

### (5-1)

The bag-making and packaging apparatus 100 pertaining to an embodiment of the packaging apparatus operates the bag-making and packaging unit 100a that is an example of a packaging mechanism to manufacture the bags B containing the articles A inside. The gas replacement device 50 serving as an optional device can be optionally attached to the bag-making and packaging apparatus 100. The bag-making and packaging apparatus 100 includes the operation control unit 96a, the first detection unit 96c, the second detection unit 96d, the notification unit, and the notification control unit 96b. The notification unit here is the touch panel display 94 or the communication unit 97 that issues a notification to the higher-level management device and/or the personal digital assistant of the operator. The operation control unit 96a controls the operation of the bag-making and packaging unit 100a. The first detection unit 96c detects whether or not the gas replacement device 50 is attached to the bag-making and packaging apparatus 100. The second detection unit 96d detects whether the setting of the gas replacement device 50 is set to the operative setting or the inoperative setting. The notification unit issues a notification of information relating to the gas replacement device 50. The notification control unit 96b controls the notification unit to make the notification unit issue a notification that the setting of the gas replacement device 50 is set to the inoperative setting in a case where the first detection unit 96c detects that the gas replacement device 50 is attached to the bag-making and packaging apparatus 100 and the second detection unit 96d detects that the setting of the gas replacement device 50 is set to the inoperative setting before the operation of the bag-making and packaging unit 100a is started.

In the bag-making and packaging apparatus 100 of this embodiment, a notification that the gas replacement device 50 is set to the inoperative setting is issued in a case where the setting of the gas replacement device 50 attached to the bag-making and packaging apparatus 100 is set to the inoperative setting. For that reason, the occurrence of problems where the bags B are manufactured without the gas replacement device 50 being operated when the gas replacement device 50 should be operated can be reduced.

In the bag-making and packaging apparatus 100 of this embodiment, even in a case where the optional device is the gas replacement device 50 whose operating state is difficult to check visually, the occurrence of problems where the bags B are manufactured without the gas replacement device being operated when the gas replacement device 50 should be operated can be reduced.

### (5-2)

The bag-making and packaging apparatus 100 of this embodiment includes the receiving unit. The receiving unit is the operating switches 92, the touch panel display 94, or the communication unit 97 that receives operations from the higher-level management device and/or the personal digital assistant of the operator. The receiving unit receives the confirmation operation to confirm that the setting of the gas replacement device 50 is set to the inoperative setting when the notification unit issues the notification that the setting of the gas replacement device 50 is set to the inoperative setting. The operation control unit 96a makes the bag-making and packaging unit 100a start operating after the receiving unit has received the confirmation operation when the notification unit issues the notification that the setting of the gas replacement device 50 is set to the inoperative setting.

In the bag-making and packaging apparatus 100 of this embodiment, the operation of the bag-making and packaging unit 100a is started after it has been confirmed by the operator that the gas replacement device 50 is set to the inoperative setting. The occurrence of problems where the bags B are manufactured in a state in which the gas replacement device 50 is mistakenly set to the inoperative setting can be therefore reduced.

### (5-3)

The bag-making and packaging apparatus 100 of this embodiment includes the storage unit 98. The storage unit 98 stores a log showing that the receiving unit received the confirmation operation.

In the bag-making and packaging apparatus 100 of this embodiment, if the bags B are manufactured in a state in which the gas replacement device 50 did not operate when it needed to operate, it can be easily checked whether or not the problem was caused by an operator mistake.

### (5-4)

In the bag-making and packaging apparatus 100 of this embodiment, the notification control unit 96b controls the notification unit to make the notification unit issue a notification that the setting of the gas replacement device 50 is set to the operative setting in a case where the first detection unit 96c detects that the gas replacement device 50 is attached to the bag-making and packaging apparatus 100 and the second detection unit 96d detects that the setting of the gas replacement device 50 is set to the operative setting.

In the bag-making and packaging apparatus 100 of this embodiment, the occurrence of problems where the bags B are manufactured in a state in which the gas replacement device 50 is operated when the gas replacement device 50 should not be operated can be reduced.

### (5-5)

In the bag-making and packaging apparatus 100 of this embodiment, the notification control unit 96b controls the notification unit to make the notification unit issue a notification that the gas replacement device 50 is attached in a case where the first detection unit 96c detects that the gas replacement device 50 is attached to the bag-making and packaging apparatus 100.

In the bag-making and packaging apparatus 100 of this embodiment, it can be easily recognized that the bag-making and packaging apparatus 100 is detecting the presence of the gas replacement device 50.

### (5-6)

In the bag-making and packaging apparatus 100 of this embodiment, the notification control unit 96b does not make the notification unit issue a notification of the information relating to the gas replacement device 50 in a case where the first detection unit 96c detects that the gas replacement device 50 is not attached to the bag-making and packaging apparatus 100.

In the bag-making and packaging apparatus 100 of this embodiment, notification of information relating to the gas replacement device 50 that is not present are not issued, so the operator is not confused by unnecessary information.

### (6) Example Modifications

Example modifications of the above embodiment will be described below. It will be noted that the example modifications may be combined as appropriate to the extent that they are not incompatible with each other.

### (6-1) Example Modification A

The way the notification unit issues notifications is not limited to the way described above. For example, the notification unit may also issue notifications of information relating to the optional device by causing a lamp attached to the bag-making and packaging apparatus 100 to flash on and off, and/or by outputting audio from a speaker attached to the bag-making and packaging apparatus 100.

### (6-2) Example Modification B

In the above embodiment, the first detection unit 96c detects whether or not the gas replacement device 50 is attached based on the information stored in the storage unit 98, but the method of detection by the first detection unit 96c is not limited to this method. For example, the first detection unit 96c may also detect whether or not the gas replacement device 50 is attached by detecting whether or not the bag-making and packaging apparatus 100 and the gas replacement device 50 (specifically, the valve 52) are electrically interconnected. Furthermore, the first detection unit 96c may also use a sensor not shown in the drawings to detect whether or not the gas replacement device 50 is attached.

### (6-3) Example Modification C

The above embodiment was described using as an example a case where the optional device that can be optionally attached to the bag-making and packaging apparatus 100 is the gas replacement device 50. However, the type of the optional device is not limited to the gas replacement device 50.

For example, the optional device that can be optionally attached to the packaging apparatus may also include a printing device, a print checking device, and a metal detection device. The printing device is a device that prints various types of information (e.g., manufacturing dates, expiration dates, serial numbers, etc.) on the outer surface of the film F for packaging. The print checking device is a device that uses a camera, for example, to image the outer surface of the film F to check whether there are problems (misregistration, printing omissions, etc.) in the printing by the printing device. The metal detection device is a device that detects whether the articles A supplied from the combination weigher 2 to the opening in the upper end of the tubular member 20 of the bag-making and packaging apparatus 100 are contaminated with metal.

These devices are also sometimes switched between ON and OFF settings. In other words, the setting of these devices is also sometimes switched between an operative setting and an inoperative setting. For that reason, in a case where these devices are attached to the bag-making and packaging apparatus 100, it is preferred that the second detection unit 96d detect whether the setting of the device is set to the operative setting or the inoperative setting and that the notification unit issue a notification in a case where the setting is set to the inoperative setting for example. It will be noted that other than the type of the optional device being different, the rest is the same as in the above embodiment, so here detailed description will be omitted.

### Industrial Applicability

The invention is useful since it can be widely applied to packaging apparatus to which optional devices can be optionally attached.

### Reference Signs List

- 50: Gas Replacement Device (Optional Device)
- 92: Operating Switches (Receiving unit)
- 94: Touch Panel Display (Notification Unit, Receiving unit)
- 96a: Operation Control Unit
- 96b: Notification Control Unit
- 96c: First Detection Unit
- 96d: Second Detection Unit
- 97: Communication Unit (Notification Unit, Receiving unit)
- 98: Storage Unit
- 100: Bag-making and Packaging Apparatus (Packaging Apparatus)
- 100a: Bag-making and Packaging Unit (Packaging Mechanism)
- B: Bags (Packages)

### Citation List

### Patent Literature

Patent Document 1: JP-A No. 2018-12508

## Claims

1. A packaging apparatus (100) and an optional device (50) which can be optionally attached to the packaging apparatus (100), the packaging apparatus being configured to operate a packaging mechanism to manufacture packages containing an article inside, the packaging apparatus comprising:
an operation control unit (96a) configured to control an operation of the packaging mechanism in accordance with an operation command received by a receiving unit (92, 94, 97) of the packaging apparatus(100);
a first detection unit (96c) configured to detect whether or not the optional device (50) is attached to the packaging apparatus (100);
a second detection unit (96d) configured to detect whether a setting of the optional device (50) is set to an operative setting or an inoperative setting in the operation command;
a notification unit (94, 97) configured to issue a notification of information relating to the optional device (50); and
a notification control unit (96b) configured to control the notification unit to make the notification unit issue a notification that the setting of the optional device is set to the inoperative setting in a case where the first detection unit detects that the optional device is attached to the packaging apparatus and the second detection unit detects that the setting of the optional device is set to the inoperative setting in the operation command, before the operation of the packaging mechanism is started.

2. The packaging apparatus of claim 1, wherein the receiving unit (92, 94, 97) is further configured to receive a confirmation operation to confirm that the setting of the optional device (50) is set to the inoperative setting when the notification unit issues the notification that the setting of the optional device is set to the inoperative setting,
wherein
the operation control unit (96a) is configured to make the packaging mechanism start operating after the receiving unit has received the confirmation operation when the notification unit issues the notification that the setting of the optional device is set to the inoperative setting.

3. The packaging apparatus of claim 2, further comprising
a storage unit (98) configured to store a log showing that the receiving unit received the confirmation operation.

4. The packaging apparatus of any one of claims 1 to 3, wherein
the notification control unit (96b) is configured to control the notification unit to further make the notification unit issue a notification that the setting of the optional device (50) is set to the operative setting in a case where the first detection unit detects that the optional device is attached to the packaging apparatus and the second detection unit detects that the setting of the optional device is set to the operative setting.

5. The packaging apparatus of any one of claims 1 to 4, wherein
the notification control unit (96b) is configured to control the notification unit to further make the notification unit issue a notification that the optional device is attached in a case where the first detection unit detects that the optional device is attached to the packaging apparatus.

6. The packaging apparatus of any one of claims 1 to 5, wherein
the notification control unit (96b) is configured not to make the notification unit issue a notifications of the information relating to the optional device in a case where the first detection unit detects that the optional device is not attached to the packaging apparatus.

7. The packaging apparatus of any one of claims 1 to 6, wherein
the optional device (50) is a gas replacement device configured to replace air inside the packages with a predetermined gas.

## Patentansprüche

1. Verpackungsvorrichtung (100) und ein optionales Gerät (50), das optional an der Verpackungsvorrichtung (100) angebracht werden kann, wobei die Verpackungsvorrichtung konfiguriert ist, einen Verpackungsmechanismus zu betreiben, um Verpackungen herzustellen, die einen Artikel im Inneren enthalten, wobei die Verpackungsvorrichtung aufweist:
eine Betriebssteuereinheit (96a), die konfiguriert ist, einen Betrieb des Verpackungsmechanismus gemäß einem Betriebsbefehl zu steuern, der von einer Empfangseinheit (92, 94, 97) der Verpackungsvorrichtung (100) empfangen wird;
eine erste Erfassungseinheit (96c), die konfiguriert ist, zu erfassen, ob das optionale Gerät (50) an der Verpackungsvorrichtung (100) angebracht ist oder nicht;
eine zweite Erfassungseinheit (96d), die konfiguriert ist, zu erfassen, ob eine Einstellung des optionalen Geräts (50) in dem Betriebsbefehl auf eine betriebsfähige Einstellung oder eine nicht betriebsfähige Einstellung eingestellt ist; eine Benachrichtigungseinheit (94, 97), die konfiguriert ist, eine Benachrichtigung über Informationen in Bezug auf das optionale Gerät (50) auszugeben; und
eine Benachrichtigungssteuereinheit (96b), die konfiguriert ist, die Benachrichtigungseinheit zu steuern, die Benachrichtigungseinheit zu veranlassen, eine Benachrichtigung auszugeben, dass die Einstellung des optionalen Geräts auf die nicht betriebsfähige Einstellung eingestellt ist, in einem Fall, in dem die erste Erfassungseinheit erfasst, dass das optionale Gerät an der Verpackungsvorrichtung angebracht ist, und die zweite Erfassungseinheit erfasst, dass die Einstellung des optionalen Geräts auf die nicht betriebsfähige Einstellung in dem Betriebsbefehl eingestellt ist, bevor der Betrieb des Verpackungsmechanismus gestartet wird.

2. Verpackungsvorrichtung nach Anspruch 1, wobei die Empfangseinheit (92, 94, 97) ferner konfiguriert ist, eine Bestätigungsbedienung zu empfangen, um zu bestätigen, dass die Einstellung des optionalen Geräts (50) auf die nicht betriebsfähige Einstellung eingestellt ist, wenn die Benachrichtigungseinheit die Benachrichtigung ausgibt, dass die Einstellung des optionalen Geräts auf die nicht betriebsfähige Einstellung eingestellt ist,
wobei
die Betriebssteuereinheit (96a) konfiguriert ist, den Verpackungsmechanismus zu veranlassen, den Betrieb aufzunehmen, nachdem die Empfangseinheit den Bestätigungsvorgang empfangen hat, wenn die Benachrichtigungseinheit die Benachrichtigung ausgibt, dass die Einstellung des optionalen Geräts auf die nicht betriebsfähige Einstellung eingestellt ist.

3. Verpackungsvorrichtung nach Anspruch 2, die ferner aufweist:
eine Speichereinheit (98), die konfiguriert ist, ein Protokoll zu speichern, das zeigt, dass die Empfangseinheit den Bestätigungsvorgang empfangen hat.

4. Verpackungsvorrichtung nach einem der Ansprüche 1 bis 3, wobei
die Benachrichtigungssteuereinheit (96b) konfiguriert ist, die Benachrichtigungseinheit zu steuern, die Benachrichtigungseinheit zu veranlassen, eine Benachrichtigung auszugeben, dass die Einstellung des optionalen Geräts (50) auf die betriebsfähige Einstellung eingestellt ist, in einem Fall, in dem die erste Erfassungseinheit erfasst, dass das optionale Gerät an der Verpackungsvorrichtung angebracht ist, und die zweite Erfassungseinheit erfasst, dass die Einstellung des optionalen Geräts auf die betriebsfähige Einstellung eingestellt ist.

5. Verpackungsvorrichtung nach einem der Ansprüche 1 bis 4, wobei
die Benachrichtigungssteuereinheit (96b) konfiguriert ist, die Benachrichtigungseinheit zu steuern, die Benachrichtigungseinheit ferner zu veranlassen, eine Benachrichtigung auszugeben, dass das optionale Gerät angebracht ist, in einem Fall, in dem die erste Erfassungseinheit erfasst, dass das optionale Gerät an der Verpackungsvorrichtung angebracht ist.

6. Verpackungsvorrichtung nach einem der Ansprüche 1 bis 5, wobei
die Benachrichtigungssteuereinheit (96b) konfiguriert ist, die Benachrichtigungseinheit nicht zu veranlassen, eine Benachrichtigung der Informationen bezüglich des optionalen Geräts auszugeben, in einem Fall, in dem die erste Erfassungseinheit erfasst, dass das optionale Gerät nicht an der Verpackungsvorrichtung angebracht ist.

7. Verpackungsvorrichtung nach einem der Ansprüche 1 bis 6, wobei
das optionale Gerät (50) ein Gasaustauschgerät ist, das konfiguriert ist, Luft im Inneren der Verpackungen durch ein vorbestimmtes Gas zu ersetzen.

## Revendications

1. Appareil d'emballage (100) et dispositif optionnel (50) pouvant être éventuellement mis en prise avec l'appareil d'emballage (100), l'appareil d'emballage étant configuré pour faire fonctionner un mécanisme d'emballage afin de fabriquer des emballages contenant un article à l'intérieur, l'appareil d'emballage comprenant:
une unité de commande de fonctionnement (96a) configurée pour commander un fonctionnement du mécanisme d'emballage en fonction d'une commande de fonctionnement reçue par une unité de réception (92, 94, 97) de l'appareil d'emballage (100) ;
une première unité de détection (96c) configurée pour détecter si le dispositif optionnel (50) est en prise ou non avec l'appareil d'emballage (100) ;
une deuxième unité de détection (96d) configurée pour détecter si un réglage du dispositif optionnel (50) est réglé sur un réglage opérationnel dans la commande de fonctionnement ;
une unité de notification (94, 97) configurée pour émettre une notification d'informations relatives au dispositif optionnel (50) ; et
une unité de commande de notification (96b) configurée pour commander l'unité de notification afin que celle-ci émette une notification indiquant que le réglage du dispositif optionnel est réglé sur le réglage inopérationnel dans le cas où la première unité de détection détecte que le dispositif optionnel est en prise avec l'appareil d'emballage et la deuxième unité de détection détecte que le réglage du dispositif optionnel est réglé sur le réglage inopérationnel dans la commande de fonctionnement avant que le fonctionnement du mécanisme d'emballage ne soit démarré.

2. Appareil d'emballage selon la revendication 1, dans lequel l'unité de réception (92, 94, 97) est en outre configurée pour recevoir un message de confirmation afin de confirmer que le réglage du dispositif optionnel (50) est réglé sur le réglage inopérationnel lorsque l'unité de notification émet la notification selon laquelle le réglage du dispositif optionnel est réglé sur le réglage inopérationnel,
dans lequel, l'unité de commande de fonctionnement (96a) est configurée pour que le mécanisme d'emballage commence à fonctionner après que l'unité de réception a reçu le message de confirmation lorsque l'unité de notification émet la notification selon laquelle le réglage du dispositif optionnel est réglé sur le réglage inopérationnel.

3. Appareil d'emballage selon la revendication 2, comprenant en outre
une unité de stockage (98) configurée pour stocker un journal indiquant que l'unité de réception a reçu le message de confirmation.

4. Appareil d'emballage selon l'une quelconque des revendications 1 à 3, dans lequel
l'unité de commande de notification (96b) est configurée pour commander l'unité de notification afin que celle-ci émette en outre une notification selon laquelle le réglage du dispositif optionnel (50) est réglé sur le réglage opérationnel dans le cas où la première unité de détection détecte que le dispositif optionnel est en prise avec l'appareil d'emballage et la deuxième unité de détection détecte que le réglage du dispositif optionnel est réglé sur le réglage opérationnel.

5. Appareil d'emballage selon l'une quelconque des revendications 1 à 4, dans lequel
l'unité de commande de notification (96b) est configurée pour commander l'unité de notification afin que celle-ci émette en outre une notification indiquant que le dispositif optionnel est en prise dans le cas où la première unité de détection détecte que le dispositif optionnel est en prise avec l'appareil d'emballage.

6. Appareil d'emballage selon l'une quelconque des revendications 1 à 5, dans lequel
l'unité de commande de notification (96b) est configurée pour ne pas faire en sorte que l'unité de notification émette une notification des informations relatives au dispositif optionnel dans le cas où la première unité de détection détecte que le dispositif optionnel n'est pas en prise avec l'appareil d'emballage.

7. Appareil d'emballage selon l'une quelconque des revendications 1 à 6, dans lequel
le dispositif optionnel (50) est un dispositif de remplacement de gaz configuré pour remplacer l'air à l'intérieur des emballages par un gaz prédéterm iné.
